(19) Europäisches Patentamt
European Patent Office
Office européen des brevets

(11) Veröffentlichungsnummer: **0 304 755 B1**

(12) **EUROPÄISCHE PATENTSCHRIFT**

(45) Veröffentlichungstag der Patentschrift: **03.06.92**

(51) Int. Cl.5: **C09D 5/44**, C09D 7/12, C25D 13/06, C25D 13/10

(21) Anmeldenummer: **88113214.6**

(22) Anmeldetag: **13.08.88**

(54) **Verfahren zur Herstellung Biuretgruppen enthaltender Vernetzungskomponenten für kationische Lackbindemittel.**

(30) Priorität: **25.08.87 AT 2116/87**

(43) Veröffentlichungstag der Anmeldung:
**01.03.89 Patentblatt 89/09**

(45) Bekanntmachung des Hinweises auf die Patenterteilung:
**03.06.92 Patentblatt 92/23**

(84) Benannte Vertragsstaaten:
**DE ES FR GB IT**

(56) Entgegenhaltungen:
**AT-B- 382 384**

(73) Patentinhaber: **VIANOVA KUNSTHARZ AKTIEN-GESELLSCHAFT**
**Postfach 191 Leechgasse 21**
**A-8011 Graz(AT)**

(72) Erfinder: **Paar, Willibald, Dr.**
**Schanzelgasse 19**
**A-8010 Graz(AT)**

EP 0 304 755 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Aus der AT-PS 382 384 sind Vernetzungskomponenten für kationische Lackbindemittel bekannt, die durch Umsetzung von β-Hydroxyaminen mit Isocyanatverbindungen und weiterer Reaktion der entstandenen Harnstoffverbindungen mit Formaldehyd erhalten werden.

Es wurde nun gefunden, daß man Vernetzungskomponenten mit erhöhter Härtungskapazität erhält, wenn man durch Reaktion dieser substituierten Harnstoffe mit weiteren Isocyanatverbindungen Biuretgruppen einführt. Es hat sich weiters gezeigt, daß dadurch auch die Haftfestigkeit der, solche Vernetzungskomponenten enthaltenden, kathodisch abgeschiedenen Lackfilme weiter verbessert werden kann. Die Haftfestigkeit von Lackschichten, sei es zum metallischen Substrat, sei es zu den verschiedenartigen Folgeschichten, hat für die Automobilindustrie zur Vermeidung von Steinschlagschäden, zusammen mit der Korrosionsfestigkeit in den letzten Jahren zunehmend an Bedeutung gewonnen.

Die vorliegende Erfindung betrifft demgemäß ein Verfahren zur Herstellung Biuretgruppen enthaltender Vernetzungskomponenten für kationische Lackbindemittel, welche Hydroxylgruppen und/oder primäre oder sekundäre Aminogruppen aufweisen, welches dadurch gekennzeichnet ist, daß man vorzugsweise in aprotischen Lösemitteln.

(A1) β-Hydroxyamine der Formel

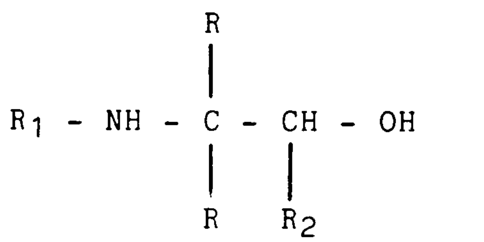

(I)

wobei

- R ein Wasserstoffatom, ein Alkyl- oder ein Hydroxymethylrest,
- $R_1$ ein Alkyl-, ein Hydroxyalkyl-, ein Hydroxypoly(alkoxy)-rest oder ein Rest der Formel $-CH_2-CH(R_4)-CO-R_3$,
- $R_2$ ein Wasserstoffatom, ein Alkylrest oder der Rest einer Monoepoxidverbindung nach Reaktion der Epoxidgruppe mit einer primären Aminogruppe,
- $R_3$ ein Alkoxyrest, Hydroxyalkoxyrest, Hydroxypoly(alkoxy)-rest oder $-NH_2$ und
- $R_4$ ein Wasserstoffatom oder eine Methylgruppe ist, oder

(A2) β-Hydroxyamine der Formeln

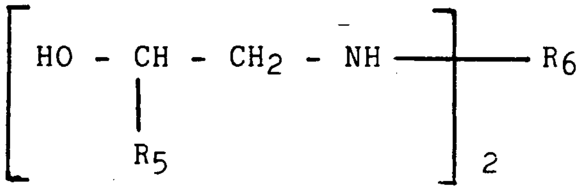 (II)

oder

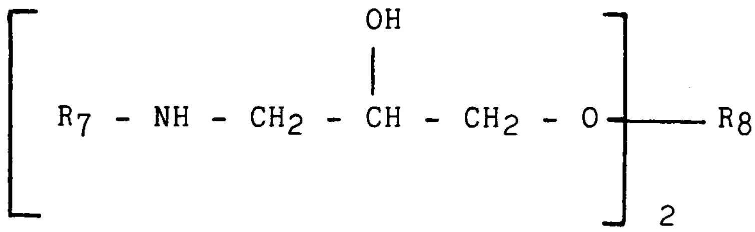 (III)

oder

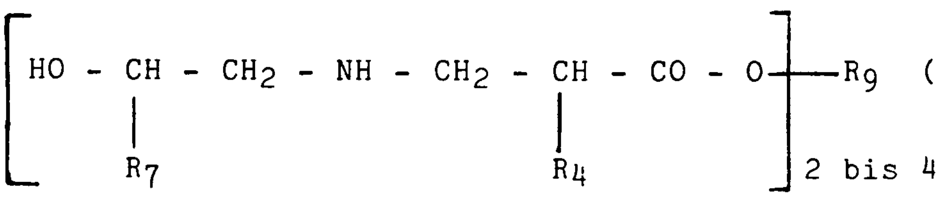 (IV)

wobei

| | |
|---|---|
| $R_5$ | jeweils einen Rest $R_2$ oder je einen Rest $R_1$ und einen Monoepoxidrest $R_2$, |
| $R_6$ | einen Alkylen- oder einen Poly-(alkoxy)-rest, |
| $R_7$ | einen Alkylrest, einen Hydroxyalkyl- oder einen tert.-Aminoalkylrest |
| $R_8$ | einen aliphatischen und/oder aromatischen Rest eines Di- oder Polyglycidylethers und |
| $R_9$ | den Rest eines Polyols mit 2 bis 4 Hydroxylgruppen darstellt, |

mit

(B) Isocyanatverbindungen bei 30 bis 60 °C in einem Verhältnis umsetzt, daß mindestens eine sekundäre Aminogruppe der $\beta$-Hydroxyamine mit einer Isocyanatgruppe reagiert wird, mit der Maßgabe, daß für $\beta$-Hydroxyamine der Gruppe (A1) im wesentlichen Di-oder Polyisocyanatverbindungen und für $\beta$-Hydroxyamine der Gruppe (A2) im wesentlichen Monoisocyanatverbindungen eingesetzt werden und

(C) die NH-Gruppen, sowie die gegebenenfalls vorliegenden weiteren isocyanatreaktiven Gruppen des Reaktionsproduktes mit 50 bis 100 Mol % eines halbblockierten Diisocyanates bei 20 bis 100 °C umsetzt.

Die Erfindung betrifft weiters die nach diesem Verfahren hergestellten Vernetzungskomponenten.

Weiters betrifft die Erfindung die Verwendung der nach diesem Verfahren hergestellten Vernetzungskomponenten zusammen mit Hydroxylgruppen und/oder primäre oder sekundäre Aminogruppen tragenden Basisharzen in einem Verhältnis von 60 bis 95, vorzugsweise 70 bis 85 Gew.-% des Basisharzes zu 5 bis 40, vorzugsweise 15 bis 30 Gew.-% der Vernetzungskomponente in kathodisch abscheidbaren Elektrotauchlacken.

Die erfindungsgemäß hergestellten Vernetzungskomponenten ergeben in Kombination mit Hydroxyl- und/oder primäre oder sekundäre Aminogruppen tragenden kationischen Harzkomponenten, vorzugsweise solchen auf Basis von Epoxid-Amin-Addukten oder ähnliche Molekülbausteine aufweisenden Produkten Bindemittel, welche bereits bei Temperaturen ab 150 °C eingebrannt werden können.

Die erfindungsgemäß eingesetzten $\beta$-Hydroxyamine sind bereits in der vorne zitierten AT-PS 382 384, welche für die vorliegende Anmeldung als Referenz gilt, beschrieben.

Als Verbindungen der Gruppe (A1) kommen, wie auch dort beschrieben, sekundäre Amine, wie Diethanolamin, Diisopropanolamin und homologe $\beta$-Hydroxyamine zur Verwendung. Vorzugsweise werden $\beta$-Hydroxyamine mit sekundären Hydroxylgruppen eingesetzt. Vorteilhaft können anstelle dieser einfachen

Amine Umsetzungsprodukte von primären Alkylaminen mit Monoepoxidverbindungen, wie Glycidylester von Monocarbonsäuren, eingesetzt werden. Eine andere brauchbare Gruppe sind die MICHAEL-Addukte von Acrylsäureestern oder Acrylamid an primäre β-Hydroxyamine, wie Monoethanolamin oder Monoisopropanolamin und weitere homologe β-Hydroxyamine.

Amine der Gruppe (A2), d. h. Amine mit zwei oder mehr β-Hydroxyaminogruppierungen werden beispielsweise erhalten

(a) durch Umsetzung von N-Ethanol-alkylendiaminen wie N-ethanol-ethylendiamin (Aminoethyl-ethanolamin) oder entsprechenden Alkylenhomologen oder primären Alkylendiaminen, wie Ethylendiamin und dessen Homologen, insbesonders Hexamethylendiamin, mit Monoepoxidverbindungen, insbesonders Monocarbonsäureglycidylestern;

(b) durch Umsetzung von primären Alkylmonoaminen mit 4 oder mehr C-Atomen mit Di- oder Polyglycidylverbindungen, wie Diglycidylether von aliphatischen oder aromatischen Di- oder Polyhydroxyverbindungen, beispielsweise Glykolen, Diphenolen oder Phenolnovolaken, vorzugsweise von Polyalkylenglykolen;

(c) durch Umsetzung von primären β-Hydroxyaminen mit Di- oder Polyacrylaten wie Di-Propylenglykoldiacrylat oder Trimethylolpropantriacrylat.

In der ersten Reaktionsstufe werden als Isocyanatverbindungen beim Einsatz von Aminen der Gruppe (A1), d. h. β-Hydroxyaminen, welche nur eine β-Hydroxygruppierung aufweisen, zur Erzielung der für eine Vernetzung ausreichenden Funktionalität Di- oder Polyisocyanate eingesetzt. Beispielsweise seien hier die aromatischen Diisocyanate, wie Toluylendiisocyanat, aliphatische Diisocyanate wie das Hexamethylendiisocyanat oder cycloaliphatische Diisocyanate, wie das Isphorondiisocyanat genannt. Als höherfunktionelle Isocyanatverbindungen kommen hier die bekannten Addukte von Diisocyanaten an Polyole zur Verwendung.

Als Monoisocyanate beim Einsatz von Aminen der Gruppe (A2) können Monoisocyanate, wie Phenylisocyanat oder Alkylisocyanate, sowie halbblockierte Diisocyanate, z. B. aus äquimolaren Mengen Toluylendiisocyanat und aliphatischen Monoalkoholen verwendet werden.

Gegebenenfalls können durch den Einsatz von Kombinationen von Diisocyanaten und Aminen der Gruppe (A2) auch höhermolekulare Strukturen wie

$$(A1)-\left(DI-(A2)\right)_n-DI-(A1) \quad \text{oder}$$

$$(A2)-DI-(A2)$$

aufgebaut werden, wobei DI den Rest eines Diisocyanats und n ≧ 1, vorzugsweise 1, ist.

Die Herstellung der substituierten Harnstoffverbindungen erfolgt durch Umsetzung des β-Hydroxyamins, vorzugsweise in Gegenwart eines aprotischen Lösungsmittels wie Toluol, Xylol oder Methylisobutylketon, mit der Isocyanatverbindung bei 25 bis 40 ° C. Dabei wird die Isocyanatverbindung dem vorgelegten Amin unter Kühlung langsam zugesetzt. Die Reaktion ist mit dem Ende der Zugabe im wesentlichen beendet und wird durch Bestimmung des NCO-Wertes kontrolliert.

In der weiteren Reaktionsstufe wird der substituierte Harnstoff mit weiteren halbblockierten Diisocyanaten bei 20 bis 100 ° C umgesetzt, wobei die Zugabe vorteilhafterweise bei niedriger Temperatur erfolgt; die Vervollständigung der Reaktion erfolgt bei steigender Temperatur bis zu einem NCO-Wert von 0. Als halbblockierte Diisocyanate können sowohl die in der ersten Stufe gegebenenfalls eingesetzten derartigen Verbindungen verwendet werden; ebenso können auch andere Diisocyanate und Blockierungsmittel, wie sie dem Fachmann bekannt und zugänglich sind, eingesetzt werden. Vorzugsweise werden Diisocyanate eingesetzt, deren NCO-Gruppen verschiedene Reaktivität gegenüber dem Blockierungsmittel zeigen, wie dies z. B. beim 2,4-Toluylendiisocyanat oder beim Isophorondiisocyanat der Fall ist. Als bevorzugte Blockierungsmittel werden Monoalkohole mit 4 und mehr C-Atomen verwendet.

Die ebenfalls einsetzbaren alpha,beta-ethylenisch ungesättigten Monoisocyanatverbindungen können durch partielle Umsetzung der Diisocyanate mit Hydroxy(meth)acrylaten hergestellt werden.

Das Produkt wird in der anfallenden Form oder gelöst in geeigneten Lösemitteln, wie Propylenglykolmonomethylether, Diethylenglykoldimethylether oder Methylisobutylketon eingesetzt.

Die Mengenverhältnisse bei der Herstellung der Vernetzungskomponente werden so gewählt, daß in der ersten Stufe pro sekundärer Aminogrupe eine Isocyanatgruppe zur Reaktion gelangt. In der zweiten Stufe

wird proisocyanatreaktiver Stelle 0,5 bis 1,0 Mol (50 bis 100 Mol % der isocyanatreaktiven Stellen) des halbblokkierten Diisocyanats eingesetzt. Als isocyanatreaktive Stellen werden dabei sowohl die Wasserstoffatome der Harnstoffkonfiguration, die zur Ausbildung von Biuretstrukturen führen, gezählt, als auch weitere gegebenenfalls andere isocyanatreaktive Stellen wie Hydroxyl-oder weitere im Molekül vorhandene Aminogruppen.

Die Umsetzung erfolgt in Gegenwart von isocyanatinerten Lösemitteln bei 50 bis 70°C bis zu einem NCO-Wert von praktisch 0.

Die Herstellung der Lacke unter Verwendung der erfindungsgemäß hergestellten Vernetzungskomponente erfolgt in bekannter Weise durch Mischen mit der Basisharzkomponente bei mäßig erhöhter Temperatur. Die erfindungsgemäß hergestellten Vernetzungskomponenten werden dabei in einer Menge von 10 bis 40 Gew.-%, vorzugsweise 15 bis 30 Gew.-%, bezogen auf das Gesamtbindemittel eingesetzt. Die Formulierung der Lacke, ihre Pigmentierung, Herstellung und Verarbeitung, insbesonders nach dem kathodischen Elektrotauchverfahren ist dem Fachmann bekannt und bedarf keiner weiteren Erläuterung.

Die folgenden Beispiele erläutern die Erfindung, ohne sie in ihrem Umfang zu beschränken. Alle Angaben in Teilen oder Prozenten beziehen sich, soferne nichts anderes angegeben ist, auf Gewichtseinheiten.

Beispiel 1:

622 Tle eines Umsetzungsproduktes aus äquimolaren Mengen Monoethanolamin und einem Glycidylester einer verzweigten $C_9$-$C_{11}$-Monocarbonsäure (Molgew. 311) und 616 Tle eines Umsetzungsproduktes aus 1 Mol 1,6-Hexamethylendiamin und 2 Mol der oben genannten Monocarbonsäure (Molgew. 616) werden mit 348 Tlen Toluylendiisocyanat (handelsübliche Isomerenmischung) in Anwesenheit von 680 Tlen Toluol bei 30 bis 40°C bis zu einem NCO-Wert von 0 umgesetzt. Die Lösung wird dann mit 2736 Tlen (9,0 Mol) eines mit 2-Ethylhexanol halbblockierten Toluylendiisocyanats sowie 1290 Tlen Toluol versetzt und die Temperatur innerhalb von 2 Stunden von 40 auf 100°C erhöht. Die Reaktion wird bis zu einem NCO-Wert von 0 geführt und anschließend das Toluol durch Vakuum-destillation entfernt und in gleichen Anteilen durch Methoxypropanol ersetzt.

60 Tle eines Basisharzes (siehe unten) werden mit 40 Tlen der oben beschriebenen Vernetzungskomponente vermischt (die angegebenen Tle beziehen sich auf Festharz). Nach Zusatz von 1 % Zinn (als Dibutylzinndilaurat) und 55 mMol Ameisensäure wird mit Wasser ein 15%iger Klarlack hergestellt. Ein auf gereinigtem Stahlblech kathodisch abgeschiedener Film zeigt nach der Härtung (30 Minuten bei 150°C) eine Trockenfilmstärke von 22 ± 2 µm, bei einer Beständigkeit gegenüber 300 Doppelhüben mit Methylethylketon.

Herstellung des in Beispiel 1 eingesetzten Basisharzes

Zu einer Lösung von 1000 g eines Epoxidharzes (Basis Bisphenol A; EEG ca. 500) in 551 g Ethoxypropanol werden bei 70°C 168 g Isononansäure, 53 g Diethanolamin und 33 g Diethylaminopropylamin zugegeben und das Reaktionsgemisch bei 95 bis 100°C so lange gehalten, bis eine Säurezahl von unter 3 mg KOH/g erreicht ist (Hydroxylzahl = 270 mg KOH/g).

Beispiel 2:

190 Tle eines Bisphenol-A-diglycidylethers (EEG ca. 190) werden in 77 Tlen Diethylenglykoldimethylether gelöst und bei 80°C mit 119 Tlen (1 Mol) Aminoethylpropandiol bis zum vollständigen Umsatz der Epoxidgruppen reagiert. Nach Zugabe von 900 Tlen Diethylenglykoldimethylether werden innerhalb 1 Stunde 1520 Tle (5 Mol) eines mit 2-Ethylhexanol halbblokkierten Toluylendiisocyanats zugesetzt und bei 90°C bis zu einem NCO-Wert von 0 reagiert.

70 Tle eines Basisharzes (Festharz) (Herstellung siehe unten) werden mit 30 Tlen der oben beschriebenen Vernetzungskomponente (Festharz) vermischt. Nach Zusatz von 0,6 % Zinn (als Dibutylzinndilaurat) und 40 mMol Essigsäure wird mit Wasser ein 15%iger Klarlack hergestellt. Ein auf gereinigtem Stahlblech kathodisch abgeschiedener Film zeigt nach der Härtung (30 Minuten bei 150°C) eine Trockenfilmstärke von 22 ± 2 µm, bei einer Beständigkeit gegenüber 300 Doppelhüben mit Methylethylketon.

Herstellung des in Beispiel 2 eingesetzten Basisharzes

500 Tle eines Epoxidharzes auf Basis Bisphenol A (Epoxidäquivalentgewicht ca. 500) werden in 214

Tlen Propylenglykolmonomethylether gelöst und bei 110 °C mit 83 Tlen eines Halbesters aus Phthalsäureanhydrid und 2-Ethylhexanol in Gegenwart von 0,5 g Triethylamin als Katalysator bis zu einer Säurezahl von weniger als 3 mg KOH/g reagiert. Dann werden 120 Tle eines NH-funktionellen Oxazolidins aus Aminoethylethanolamin, 2-Ethylhexylacrylat und Formaldehyd, sowie 26 Tle Diethylaminopropylamin zugefügt und der Ansatz bei 80 °C bis zu einem Epoxidwert von praktisch 0 reagiert. Der Ansatz wird mit 200 Tlen Propylenglykolmonomethylether verdünnt.

Beispiel 3:

226 Tle (2 Mol) Diisopropanolamin werden in 600 Tlen N-Methylpyrrolidon gelöst und bei 30 bis 40 °C unter Kühlung mit 210 Tlen (1 Mol) Trimethylhexamethylendiisocyanat umgesetzt. Das Reaktionsprodukt wird auf 70 °C erwärmt und nach Zusatz von 1560 Tlen (5 Mol) eines mit Ethylenglykolmonoethylether halbblokkierten Isophorondiisocyanats und 0,2 Tlen Triethylamin (als Katalysator) bis zum vollständigen Verbrauch der NCO-Gruppen reagiert.

70 Tle des auch in Beispiel 2 eingesetzten Basisharzes werden mit 30 Tlen der oben beschriebenen Vernetzungskomponente (Festharz) vermischt. Nach Zusatz von 0,6 % Zinn (als Dibutylzinndilaurat) und 40 mMol Essigsäure wird mit Wasser ein 15%iger Klarlack hergestellt. Ein auf gereinigtem Stahlblech kathodisch abgeschiedener Film zeigt nach der Härtung (30 Minuten bei 170 °C) eine Trockenfilmstärke von 22 ± 2 µm, bei einer Beständigkeit gegenüber 300 Doppelhüben mit Methylethylketon.

Beispiel 4:

640 Tle Polypropylenglykoldiglycidylether (EEG ca. 320) werden bei 80 °C mit 121 Tlen (1 Mol) Tris-(hydroxymethyl)aminomethan (Trisamine) bis zum Verbrauch einer Epoxidgruppe umgesetzt. Nach Zusatz von 92 Tlen (0,9 Mol) Dimethylaminopropylamin wird die Reaktion bei 80 °C bis zu einem Epoxidwert von 0 weitergeführt. Nach Zusatz von 700 Tlen Diethylenglykoldimethylether und 2808 Tlen (9 Mol) eines mit Isononanol halbblockierten Toluylendiisocyanats wird bei 85 bis 90 °C bis zu einem NCO-Wert von 0 reagiert.

60 Tle eines Basisharzes (Festharz) (Herstellung in bekannter Weise durch Umsetzung von 1 Mol eines Epoxidharzes auf Basis von Bisphenol A (Epoxidäquivalentgewicht ca. 475) mit 2 Mol Diethanolamin; Anlösung: 70 % in Methoxypropanol) werden mit 40 Tlen der oben beschriebenen Vernetzungskomponente (Festharz) vermischt. Nach Zusatz von 1 % Zinn (als Dibutylzinndilaurat) und 50 mMol Ameisensäure wird mit Wasser ein 20%iger Klarlack hergestellt. Ein auf gereinigtem Stahlblech kathodisch abgeschiedener Film zeigt nach der Härtung (30 Minuten bei 150 °C) eine Trockenfilmstärke von 22 ± 2 µm, bei einer Beständigkeit gegenüber 300 Doppelhüben mit Methylethylketon.

**Patentansprüche**

**Patentansprüche für folgende Vertragsstaaten : DE, FR, GB, IT**

**1.** Verfahren zur Herstellung Biuretgruppen enthaltender Vernetzungskomponenten für kationische Lackbindemittel, welche Hydroxylgruppen und/oder primäre oder sekundäre Aminogruppen aufweisen, dadurch gekennzeichnet, daß man vorzugsweise in aprotischen Lösemitteln

(A1) β-Hydroxyamine der Formel

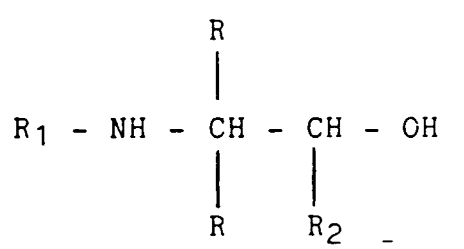

(I)

wobei

R ein Wasserstoffatom, ein Alkyl- oder ein Hydroxymethylrest,

$R_1$ ein Alkyl-, ein Hydroxyalkyl-, ein Hydroxypoly-(alkoxy)-rest oder ein Rest der Formel $-CH_2-CH(R_4)-CO-R_3$,

$R_2$ ein Wasserstoffatom, ein Alkylrest oder der Rest einer Monoepoxidverbindung nach Reaktion der Epoxidgruppe mit einer primären Aminogruppe,
$R_3$ ein Alkoxyrest, Hydroxyalkoxyrest, Hydroxypoly-(alkoxy)-rest oder $-NH_2$ und
$R_4$ ein Wasserstoffatom oder eine Methylgruppe ist, oder
(A2) β-Hydroxyamine der Formeln

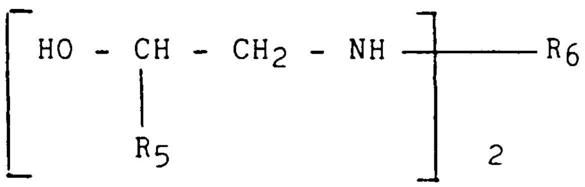
(II)

oder

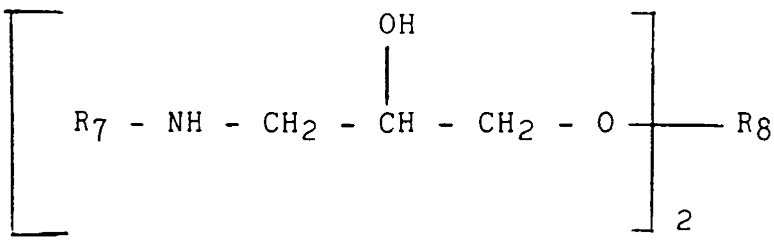
(III)

oder

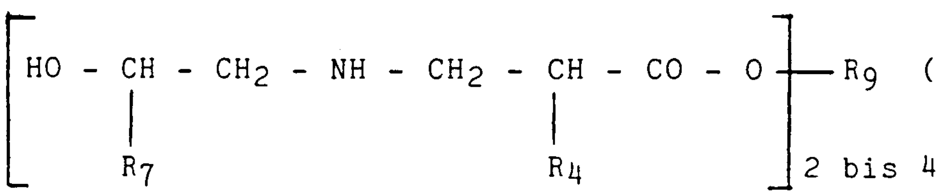
(IV)

wobei
$R_5$ jeweils einen Rest $R_2$ oder je einen Rest $R_1$ und einen Monoepoxidrest $R_2$,
R6 einen Alkylen- oder einen Poly-(alkoxy)-rest,
$R_7$ einen Alkylrest, einen Hydroxyalkyl- oder einen tert.-Aminoalkylrest
$R_8$ einen aliphatischen und/oder aromatischen Rest eines Di- oder Polyglycidylethers und
$R_9$ den Rest eines Polyols mit 2 bis 4 Hydroxylgruppen darstellt,
mit
(B) Isocyanatverbindungen bei 30 bis 60 °C in einem Verhältnis umsetzt, daß mindestens eine sekundäre Aminogruppe der β-Hydroxyamine mit einer Isocyanatgruppe reagiert wird, mit der Maßgabe, daß für β-Hydroxyamine der Gruppe (A1) im wesentlichen Di-oder Polyisocyanatverbindungen und für β-Hydroxyamine der Gruppe (A2) im wesentlichen Monoisocyanatverbindungen eingesetzt werden und
(C) die NH-Gruppen, sowie die gegebenenfalls vorliegenden weiteren isocyanatreaktiven Gruppen des Reaktionsproduktes mit 50 bis 100 Mol % eines halbblockierten Diisocyanates bei 20 bis 100 °C umsetzt.

2. Vernetzungskomponente für kationische Lackbindemittel, welche Hydroxylgruppen und/oder primäre oder sekundäre Aminogruppen aufweisen, hergestellt entsprechend Anspruch 1.

3. Verwendung der nach dem Verfahren gemäß Anspruch 1 hergestellten Vernetzungskomponenten zusammen mit Hydroxylgruppen und/oder primäre oder sekundäre Aminogruppen tragenden Basisharzen in einem Verhältnis von 60 bis 95, vorzugsweise 70 bis 85 Gew.-%, des Basisharzes zu 5 bis 40,

vorzugsweise 15 bis 30 Gew.-%, der Vernetzungskomponente in kathodisch abscheidbaren Elektrotauchlacken.

**Patentansprüche für folgenden Vertragsstaat : ES**

1. Verfahren zur Herstellung Biuretgruppen enthaltender Vernetzungskomponenten für kationische Lackbindemittel, welche Hydroxylgruppen und/oder primäre oder sekundäre Aminogruppen aufweisen, dadurch gekennzeichnet, daß man vorzugsweise in aprotischen Lösemitteln

(A1) β-Hydroxyamine der Formel

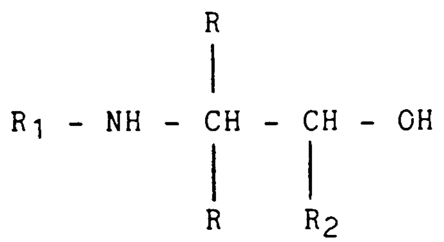

(I)

wobei

R ein Wasserstoffatom, ein Alkyl- oder ein Hydroxymethylrest,

$R_1$ ein Alkyl-, ein Hydroxyalkyl-, ein Hydroxypoly-(alkoxy)-rest oder ein Rest der Formel $-CH_2-CH(R_4)-CO-R_3$,

$R_2$ ein Wasserstoffatom, ein Alkylrest oder der Rest einer Monoepoxidverbindung nach Reaktion der Epoxidgruppe mit einer primären Aminogruppe,

$R_3$ ein Alkoxyrest, Hydroxyalkoxyrest, Hydroxypoly-(alkoxy)-rest oder $-NH_2$ und

$R_4$ ein Wasserstoffatom oder eine Methylgruppe ist, oder

(A2) β-Hydroxyamine der Formeln

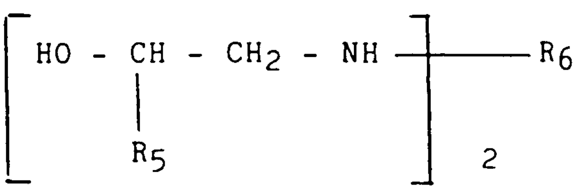

(II)

oder

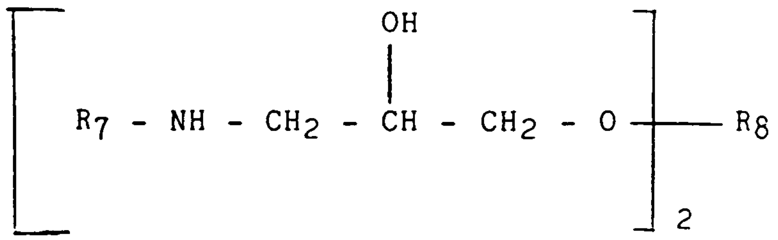

(III)

oder

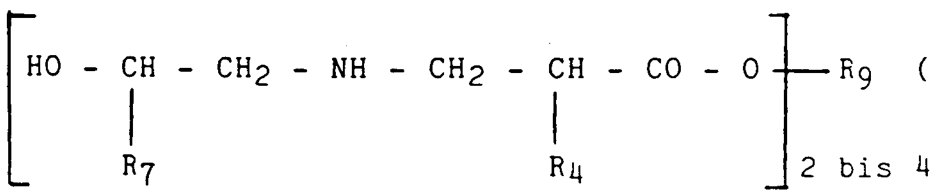

(IV)

wobei

$R_5$ jeweils einen Rest $R_2$ oder je einen Rest $R_1$ und einen Monoepoxidrest $R_2$,
$R_6$ einen Alkylen- oder einen Poly-(alkoxy)-rest,
$R_7$ einen Alkylrest, einen Hydroxyalkyl- oder einen tert.-Aminoalkylrest
$R_8$ einen aliphatischen und/oder aromatischen Rest eines Di- oder Polyglycidylethers und
$R_9$ den Rest eines Polyols mit 2 bis 4 Hydroxylgruppen darstellt,

mit

(B) Isocyanatverbindungen bei 30 bis 60 °C in einem Verhältnis umsetzt, daß mindestens eine sekundäre Aminogruppe der β-Hydroxyamine mit einer Isocyanatgruppe reagiert wird, mit der Maßgabe, daß für β-Hydroxyamine der Gruppe (A1) im wesentlichen Di-oder Polyisocyanatverbindungen und für β-Hydroxyamine der Gruppe (A2) im wesentlichen Monoisocyanatverbindungen eingesetzt werden und

(C) die NH-Gruppen, sowie die gegebenenfalls vorliegenden weiteren isocyanatreaktiven Gruppen des Reaktionsproduktes mit 50 bis 100 Mol % eines halbblockierten Diisocyanates bei 20 bis 100 °C umsetzt.

**2.** Verwendung der nach dem Verfahren gemäß Anspruch 1 hergestellten Vernetzungskomponenten zusammen mit Hydroxylgruppen und/oder primäre oder sekundäre Aminogruppen tragenden Basisharzen in einein Verhältnis von 60 bis 95, vorzugsweise 70 bis 85 Gew.-%, des Basisharzes zu 5 bis 40, vorzugsweise 15 bis 30 Gew.-%, der Vernetzungskomponente in kathodisch abscheidbaren Elektrotauchlacken.

**Claims**

**Claims for the following Contracting States : DE, FR, GB, IT**

**1.** Process for preparing cross-linking components containing biuret groups for cationic paint binders which contain hydroxyl groups and/or primary or secondary amino groups, characterised in that, preferably in aprotic solvents,

(A1) β-hydroxyamines of formula

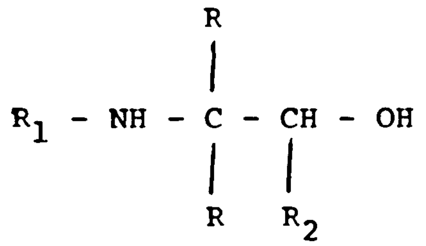

(I)

wherein

- R is a hydrogen atom or an alkyl or hydroxymethyl group,
- $R_1$ is an alkyl, hydroxyalkyl, hydroxypoly(alkoxy) group or a group of formula $- CH_2 - CH(R_4) - CO - R_3$,
- $R_2$ is a hydrogen atom, an alkyl group or the residue of a monoepoxide compound after the epoxide group has been reacted with a primary amino group,
- $R_3$ is an alkoxy, hydroxyalkoxy, hydroxypoly(alkoxy) group or $- NH_2$ and
- $R_4$ is a hydrogen atom or a methyl group, or

(A2) β-hydroxyamines of formulae

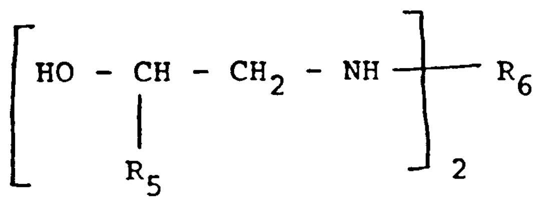

(II)

or

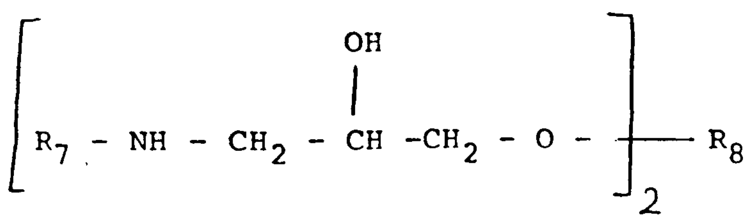

(III)

or

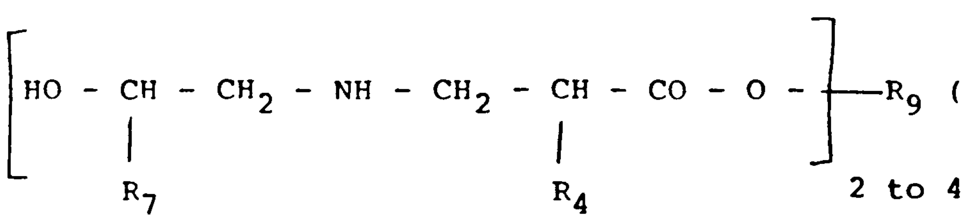

(IV)

wherein

- $R_5$ in each case represents a group $R_2$ or a group $R_1$ and a monoepoxide group $R_2$,
- $R_6$ represents an alkylene or poly(alkoxy) group,
- $R_7$ represents an alkyl group, a hydroxyalkyl or tert. aminoalkyl group
- $R_8$ represents an aliphatic and/or aromatic group of a di- or polyglycidylether and
- $R_9$ represents the residue of a polyol with 2 to 4 hydroxyl groups,

are reacted with

(B) isocyanate compounds at 30 to 60 °C in a ratio such that at least one secondary amino group of the β-hydroxyamines is reacted with an isocyanate group, with the proviso that essentially di- or

polyisocyanate compounds are used for the β-hydroxyamines of group A1 and essentially monoisocyanate compounds are used for the β-hydroxyamines of group A2 and
(C) the NH groups and any other isocyanate-reactive groups of the reaction product which may be present are reacted with 50 to 100 mol % of a half-blocked diisocyanate at 20 to 100 °C.

**2.** Cross linking component for cationic paint binders which contain hydroxyl groups and/or primary or secondary amino groups, prepared in accordance with claim 1.

**3.** Use of the cross-linking components prepared by the process as claimed in claim 1, together with basic resins containing hydroxyl groups and/or primary or secondary amino groups, in a ratio of 60 to 95, preferably 70 to 85%, by weight of the basic resin to 5 to 40, preferably 15 to 30%, by weight of the cross linking component, in cathodically depositable electrodeposition paints.

**Claims for the following Contracting State : ES**

**1.** Process for preparing cross-linking components containing biuret groups for cationic paint binders which contain hydroxyl groups and/or primary or secondary amino groups, characterised in that, preferably in aprotic solvents,
(A1) β-hydroxyamines of formula

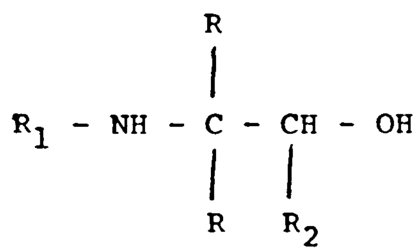

(I)

wherein
R is a hydrogen atom or an alkyl or hydroxymethyl group,
$R_1$ is an alkyl, hydroxyalkyl, hydroxypoly(alkoxy) group or a group of formula $-CH_2-CH(R_4)-CO-R_3$,
$R_2$ is a hydrogen atom, an alkyl group or the residue of a monoepoxide compound after the epoxide group has been reacted with a primary amino group,
$R_3$ is an alkoxy, hydroxyalkoxy, hydroxypoly(alkoxy) group or $-NR_2$ and
$R_4$ is a hydrogen atom or a methyl group, or
(A2) β-hydroxyamines of formulae

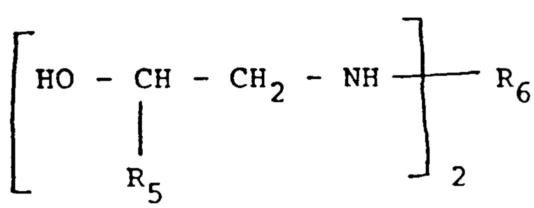

(II)

or

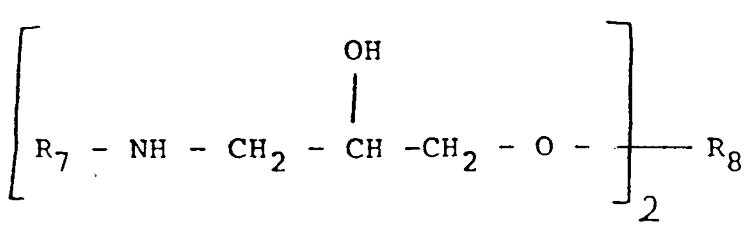

(III)

or

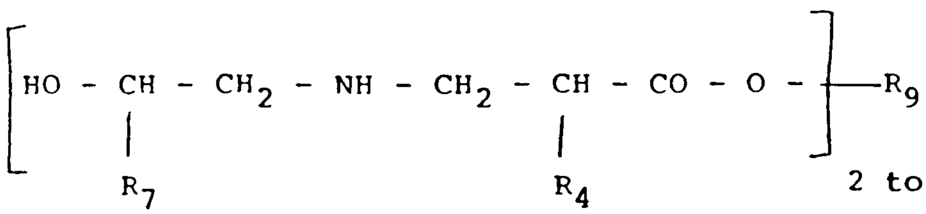

(IV)

wherein

- $R_5$ in each case represents a group $R_2$ or a group $R_1$ and a monoepoxide group $R_2$,
- $R_6$ represents an alkylene or poly(alkoxy) group,
- $R_7$ represents an alkyl group, a hydroxyalkyl or tert. aminoalkyl group
- $R_8$ represents an aliphatic and/or aromatic group of a di- or polyglycidylether and
- $R_9$ represents the residue of a polyol with 2 to 4 hydroxyl groups,

are reacted with

(B) isocyanate compounds at 30 to 60 °C in a ratio such that at least one secondary amino group of the β-hydroxyamines is reacted with an isocyanate group, with the proviso that essentially di- or polyisocyanate compounds are used for the β-hydroxyamines of group A1 and essentially monoisocyanate compounds are used for the β-hydroxyamines of group A2 and

(C) the NH groups and any other isocyanate-reactive groups of the reaction product which may be present are reacted with 50 to 100 mol % of a half-blocked diisocyanate at 20 to 100 °C.

2. Use of the cross-linking components prepared by the process as claimed in claim 1, together with basic resins containing hydroxyl groups and/or primary or secondary amino groups, in a ratio of 60 to 95, preferably 70 to 85%, by weight of the basic resin to 5 to 40, preferably 15 to 30%, by weight of the cross linking component, in cathodically depositable electrodeposition paints.

**Revendications**
**Revendications pour les Etats contractants suivants : DE, FR, GB, IT**

1. Procédé de préparation de composants de réticulation contenant des groupes biuret pour liants cationiques pour peintures qui présentent des groupes hydroxyle et/ou des groupes amine primaires ou secondaires, caractérisé en ce que l'on fait réagir de préférence dans des solvants aprotiques

(A1) des β-hydroxyamines de formule

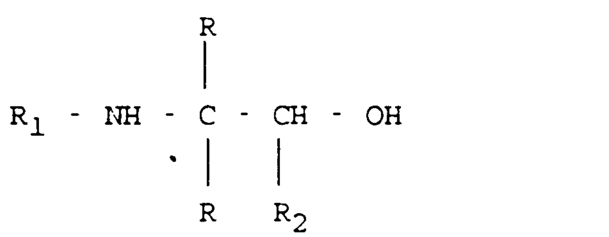

(I)

dans laquelle

- R représente un atome d'hydrogène ou un reste alkyle ou hydroxyméthyle,
- $R_1$ représente un reste alkyle, hydroxyalkyle, hydroxypoly(alcoxy) ou un reste de formule $-CH_2-CH(R_4)-CO-R_3$,
- $R_2$ représente un atome d'hydrogène, un reste alkyle ou le reste d'un composé monoépoxydique après la réaction du groupe époxyde avec un groupe amine primaire,
- $R_3$ représente un reste alcoxy, un reste hydroxyalcoxy, un reste hydroxypoly(alcoxy) ou $-NH_2$ et
- $R_4$ représente un atome d'hydrogène ou un groupe méthyle,

ou bien

(A2) des β-hydroxyamines de formule

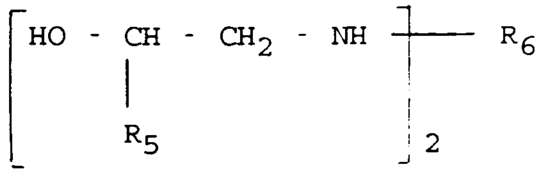

(II)

ou

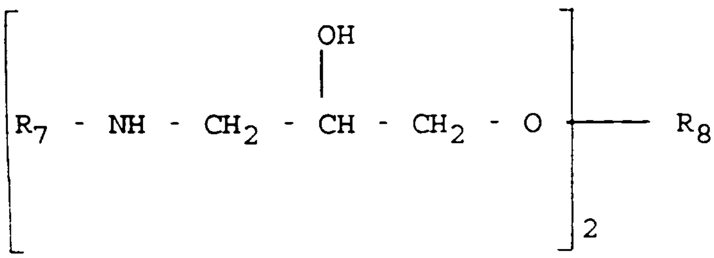

(III)

ou

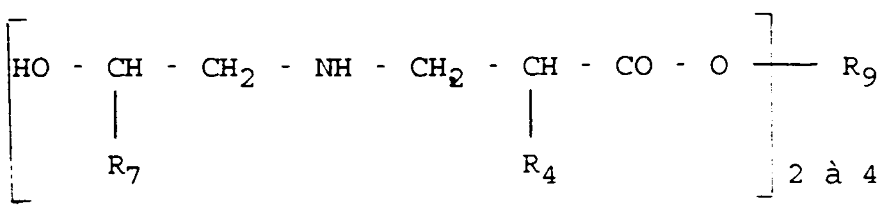

(IV)

dans lesquelles

$R_5$ représente à chaque fois un reste $R_2$ ou bien un reste $R_1$ et un reste monoépoxydique $R_2$,

$R_6$ représente un reste alkylène ou un reste poly(alcoxy),

$R_7$ représente un reste alkyle, un reste hydroxyalkyle ou un reste tert.aminoalkyle,

$R_8$ représente un reste aliphatique et/ou aromatique d'un di- ou polyglycidyléther et

$R_9$ représente le reste d'un polyol ayant 2 à 4 groupes hydroxyle,

avec

(B) des composés d'isocyanate entre 30 et 60 ° C dans des proportions telles qu'au moins un groupe amine secondaire des $\beta$-hydroxyamines réagit avec un groupe isocyanate, et avec la condition que pour les $\beta$-hydroxyamines du groupe (A1) on utilise essentiellement des composés de di- ou polyisocyanate et que pour les $\beta$-hydroxyamines du groupe (A2) on utilise essentiellement des composés de monoisocyanate et

(C) on fait réagir les groupes NH ainsi que les autres groupes éventuellement présents du produit réactionnel qui sont réactifs vis-à-vis des isocyanates avec 50 à 100 mol% d'un diisocyanate semibloqué entre 20 et 100 ° C.

2. Composants de réticulation pour liants cationiques pour peintures, qui présentent des groupes hydroxyle et/ou des groupes amine primaires ou secondaires, préparés selon la revendication 1.

3. Utilisation des composants de réticulation préparés selon le procédé de la revendication 1 en même temps que des résines de base portant des groupes hydroxyle et/ou des groupes amine primaires ou secondaires dans des proportions de 60 à 95, de préférence de 70 à 85% en poids, de la résine de base pour 5 à 40, de préférence 15 à 30% en poids, des composants de réticulation dans les peintures pour trempage électrophorétique précipitables à la cathode.

**Revendications pour l'Etat contractant suivant : ES**

1. Procédé de préparation de composants de réticulation contenant des groupes biuret pour liants cationiques pour peintures qui présentent des groupes hydroxyle et/ou des groupes amine primaires ou secondaires, caractérisé en ce que l'on fait réagir de préférence dans des solvants aprotiques

(A1) des $\beta$-hydroxyamines de formule

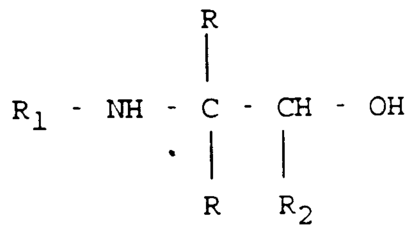

(I)

dans laquelle

R représente un atome d'hydrogène ou un reste alkyle ou hydroxyméthyle,

$R_1$ représente un reste alkyle, hydroxyalkyle, hydroxypoly(alcoxy) ou un reste de formule $-CH_2-CH(R_4)-CO-R_3$,

$R_2$ représente un atome d'hydrogène, un reste alkyle ou le reste d'un composé monoépoxydique après la réaction du groupe époxyde avec un groupe amine primaire,

$R_3$ représente un reste alcoxy, un reste hydroxyalcoxy, un reste hydroxypoly(alcoxy) ou $-NH_2$ et

$R_4$ représente un atome d'hydrogène ou un groupe méthyle,

ou bien

(A2) des β-hydroxyamines de formule

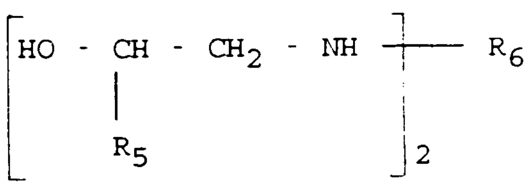

(II)

ou

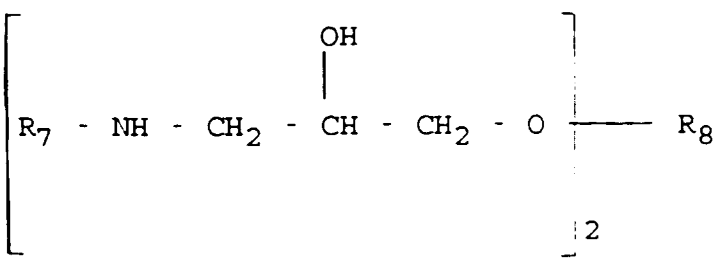

(III)

ou

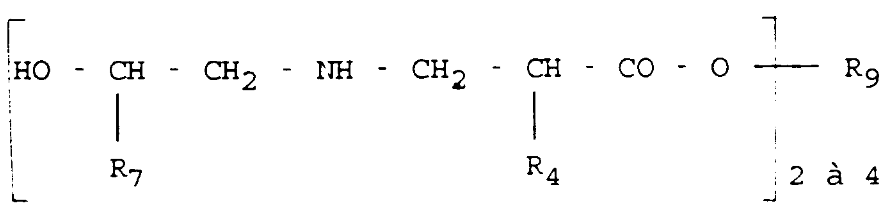

(IV)

dans lesquelles

$R_5$ représente à chaque fois un reste $R_2$ ou bien un reste $R_1$ et un reste monoépoxydique $R_2$,

$R_6$ représente un reste alkylène ou un reste poly(alcoxy),

$R_7$ représente un reste alkyle, un reste hydroxyalkyle ou un reste tert.aminoalkyle,

$R_8$ représente un reste aliphatique et/ou aromatique d'un di- ou polyglycidyléther et

$R_9$ représente le reste d'un polyol ayant 2 à 4 groupes hydroxyle,

avec

(B) des composés d'isocyanate entre 30 et 60 °C dans des proportions telles qu'au moins un groupe amine secondaire des β-hydroxyamines réagit avec un groupe isocyanate, et avec la condition que pour les β-hydroxyamines du groupe (A1) on utilise essentiellement des composés de di- ou polyisocyanate et que pour les β-hydroxyamines du groupe (A2) on utilise essentiellement des

composés de monoisocyanate et
(C) on fait réagir les groupes NH ainsi que les autres groupes éventuellement présents du produit réactionnel qui sont réactifs vis-à-vis des isocyanates avec 50 à 100 mol% d'un diisocyanate semibloqué entre 20 et 100 ° C.

**2.** Utilisation des composants de réticulation préparés selon le procédé de la revendication 1 en même temps que des résines de base portant des groupes hydroxyle et/ou des groupes amine primaires ou secondaires dans des proportions de 60 à 95, de préférence de 70 à 85% en poids, de la résine de base pour 5 à 40, de préférence 15 à 30% en poids, des composants de réticulation dans les peintures pour trempage électrophorétique précipitables à la cathode.